# EUROPEAN PATENT SPECIFICATION

(11) **EP 2 030 455 B1**
(45) Date of publication and mention of the grant of the patent: **04.09.2019**
(21) Application number: 07734679.9
(22) Date of filing: 21.05.2007
(51) Int. Cl.: H04Q 3/72, H04M 1/57, H04M 3/42, H04L 29/06

(54) **APPARATUSES AND METHODS FOR PRESENTING CALLER IDENTITIES FOR COMMUNICATIONS ORIGINATING AND TERMINATING IN DIFFERENT COMMUNICATION DOMAINS**
VORRICHTUNGEN UND VERFAHREN ZUM PRÄSENTIEREN VON ANRUFERIDENTITÄTEN FÜR ÜBERMITTLUNGEN MIT URSPRUNG UND ABSCHLUSS IN VERSCHIEDENEN KOMMUNIKATIONSDOMÄNEN
APPAREILS ET PROCÉDÉS POUR PRÉSENTER DES IDENTITÉS D'APPELANTS POUR DES COMMUNICATIONS ÉMISES ET ABOUTIES DANS DIFFÉRENTS DOMAINES DE COMMUNICATIONS

(30) Priority: 24.05.2006 US 439883
(43) Date of publication of application: 04.03.2009
(73) Proprietor: HMD Global Oy, 02610 Espoo (FI)
(72) Inventor: KAUPPINEN, Risto, A., FIN-00320 Helsinki (FI); PELKONEN, Jarno, FIN-02150 Oulu (FI)
(74) Representative: Papula Oy
(86) International application number: PCT/IB2007/001377
(87) International publication number: WO 2007/138438

(56) References cited:
- EP-A2- 1 505 814
- EP-A2- 1 587 291
- EP-A2- 1 613 025
- US-A- 5 724 412
- US-A- 5 903 636
- US-A1- 2003 091 024
- US-A1- 2003 147 518
- US-B1- 6 418 210
- KUTHAN J.: 'SIP and PSTN Connectivity', [Online] September 2003, XP003018627 Retrieved from the Internet: <URL:http://www.193.0.0.214/ripe/meetings/r ipe-46/presentations/ripe46-eof-enum-sip-ps tn.pdf>
- MARSHALL W. ET AL.: 'SIP Extensions for Caller Identify and Privacy' IETF INTERNET DRAFT, [Online] February 2001, XP015028006 Retrieved from the Internet: <URL:http://www.tools.ietf.org/id/draft-iet f-sip-privacy-01.txt>

## Description

### FIELD OF THE INVENTION

This invention relates in general to network communications, and more particularly to systems, apparatuses and methods for providing the identity of communication device users who initiate communications from data networks such as the Internet and that are targeted for users in circuit-switched domains.

### BACKGROUND OF THE INVENTION

While efforts are being made to enhance the interworking between mobile networks and fixed networks such as the Internet, there is still work to do to bring mobility to fixed Internet domains. The mobile market is fragmented, and there are very few high-end terminals in the market that can provide full support in terms of technologies such as Dual Transfer Mode (DTM), Voice over Internet Protocol (VoIP), etc. DTM is a form of circuit switching for networks that employs Time Division Multiplexing (TDM) in a way that dynamically reallocates available bandwidth to users that need it. Thus, DTM can guarantee certain bandwidth as circuit-switched systems do, while also supporting dynamic reallocation of bandwidth between hosts. VoIP generally refers to services for managing the delivery of voice information using the Internet Protocol (IP), such that the voice data is sent via packets in the packet-switched (PS) domain rather than the traditional CS domain.

From the european patent application No. EP1587291 A2 a system and method is known for providing enhanced caller identification (caller ID) information to a user. In EP1587291 a broadband access gateway communicatively coupled to a plurality of access devices may collect information about multimedia content available on the access devices and/or information exchanged with access devices. The gateway may search the collect information upon receiving information identifying a called or calling party, to find information that may be associated with the called or calling party. Selected items of the information associated with the called or calling party may then be delivered to the access device of the called or calling party. In EP1587291 information accessible to the gateway via a broadband connection may also be made available to the user of the access device. In EP1587291 it is always assumed that a directory number is always present in the incoming call.

Prior art further includes US 6,418,210 B1 that discloses providing information between a calling network and a called network. A gateway interface device can be provided with a buffer for temporarily storing a calling party's information that can be sent with the initial signaling message of a calling party on an IP network to establish a communication with a called party on a PSTN network.

The majority of existing and future terminals will be non-DTM terminals. In such cases, whenever there is an incoming voice call, the voice application takes immediate control of the terminal and suspends other applications running in the terminal. In the fixed Internet, the users may not have traditional E.164 or other similar identifiers reserved for them. For example, VoIP or other PS domain calls are not typically associated with a telephone number to which services such as CLI are associated. In such cases, when there is an incoming voice call from the Internet or other similar network to a mobile phone user, it is not possible to show the identity of the calling party.

Accordingly, there is a need in the industry to provide a fuller information set in mobile network/fixed network interworking situations. There is a need to provide information where voice calls are initiated by users operating in networks where a permanent E.164 or other similar identifier is not allocated, which is applicable to future terminal technologies or legacy terminals. There is a further need to provide mechanisms that would enable to build mid-class terminal clients (e.g., JAVA) that can provide richer user experience in mobile/internet interworking. The present invention solves these and other shortcomings of the prior art, and offers numerous advantages over the state of the art.

### SUMMARY

To overcome limitations in the prior art described above, and to overcome other limitations that will become apparent upon reading and understanding the present specification, the present invention provides a method with the features of claim 1, a terminal with the features of claim 4 and a server with the features of claim 11. Advantageous embodiments are disclosed in the dependent claims. The disclosed systems, apparatuses and methods for providing the identity of communication device users who initiate communications from data networks such as the Internet and that are targeted for users in circuit-switched domains.

In accordance with one embodiment of the invention, a method is provided for identifying calling parties. The method involves receiving a calling party identifier from a calling terminal initiating a voice call. A circuit-switched (CS) domain identifier is associated with the calling party identifier. The association of CS domain identifier and calling party identifier is provided to a targeted terminal. The voice call and the CS domain identifier associated with the calling party identifier are directed from the calling terminal to the targeted terminal. In this manner, the targeted terminal can identify the calling party using the CS domain identifier to identify the associated calling party identifier.

According to more particular embodiments of such a method, receiving a calling party identifier may include receiving the calling party identifier from the calling terminal by way of a first network operating in a packet-switched (PS) domain.

In another particular embodiment, the CS domain identifier is ascertainable via a calling line identity scheme operable in the CS domain, where the targeted terminal can identify the calling party by way of recognition of the CS domain identifier using the calling line identity scheme.

Another embodiment involves associating a CS domain identifier with the calling party identifier by creating the association each time the calling party identifier is received from the calling terminal. Further, the CS domain identifier may be configured as a temporary CS domain identifier, where providing the association of the temporary CS domain identifier and calling party identifier thereby involves sending the association to the targeted terminal for each received voice call, and prior to directing the voice call to the targeted terminal.

In accordance with another embodiment of the invention, a terminal is provided for identifying calling parties for voice communications originating in a packet-switched (PS) network and arriving via a circuit-switched (CS) network. The terminal includes storage to store contact information. The terminal is configured to receive an association of the circuit-switched network identifier with a calling party identifier associated with the packet-switched network. A processing system is provided with the terminal, and is configured to direct the storage to store the received association of the CS network identifier and the calling party identifier. A receiver receives a voice communication(s) and the CS network identifier of the calling party. The processing system is further configured to locate the stored calling party identifier of the calling party using the received CS network identifier, and to direct the terminal to present an identification of the calling party based on the calling party identifier.

According to more particular embodiments of such a terminal, the processing system may be configured to receive the association in advance of, and independent of, receiving the voice communication. In another embodiment, the processing system is configured to receive the association in connection with receiving the voice communication. In a more particular embodiment, the processing system is further configured to receive the association in connection with each PS-originating voice communication targeted for the terminal.

According to other particular embodiments, the CS network identifier is an E.164 telephone number. In one embodiment, the terminal includes a user interface (UI) to present the identification of the calling party, where the UI may include, for example, a display, a speaker, a tactile mechanism, etc.

Another embodiment of the terminal involves the processing system being configured to direct the terminal to present an identification of the calling party by presenting the calling party identifier itself. In another embodiment, the processing system is configured to direct the terminal to present an identification of the calling party by presenting a name affiliated with the calling party identifier. The terminal may be any type of communication device, such as a mobile phone, personal digital assistant, or computing device capable of wireless voice communications.

In accordance with another embodiment of the invention, a server is provided for identifying calling parties for communications between first and second networks. The server includes a transmitter, and a receiver to receive a calling party identifier by way of the first network from a calling terminal that initiated a voice call to a targeted terminal(s). The transmitter and/or receiver may, of course, be provided as discrete components or as part of a transceiver. The server includes a processing system configured to associate the calling party identifier with a second identifier recognizable in the second network. The processing system is configured to direct the transmitter to transmit the association of the calling party identifier and the second identifier, and to subsequently transmit an inter-network voice call and the second identifier associated with the calling party identifier, to the targeted terminal configured to locate the calling party identifier using the second identifier.

According to more particular embodiments of such a server, the calling terminal may initiate the voice call via the first network which is a packet-switched (PS) network, where the targeted terminal is operating in the second network which is a circuit-switched (CS) network. According to an alternative embodiment of such a server, the calling terminal may initiate the voice call via the first network which is a circuit-switched (CS) network, where the targeted terminal is operating in the second network which is a packet-switched (PS) network.

One embodiment of the server involves the processing system being configured to associate the calling party identifier with the second identifier each time a voice call is to be directed between the first and second networks to the targeted terminal. In an alternative embodiment, the processing system may be configured to associate the calling party identifier with the second identifier prior to, and independent of the voice calls being directed between the first and second networks to the targeted terminal.

These and various other advantages and features of novelty which characterize the invention are pointed out with particularity in the claims annexed hereto and form a part hereof. However, for a better understanding of the invention, its advantages, and the objects obtained by its use, reference should be made to the drawings which form a further part hereof, and to accompanying descriptive matter, in which there are illustrated and described representative examples of systems, apparatuses, and methods in accordance with the invention.

### BRIEF DESCRIPTION OF THE DRAWINGS

The invention is described in connection with the embodiments illustrated in the following diagrams.
FIG. 1 is a block diagram depicting one aspect of the invention where the identity of the calling user is made available to the call recipient where it would be otherwise unavailable;
FIG. 2 is a flow diagram illustrating an exemplary method for identifying calling parties in a voice communication involving both packet-switched (PS) and circuit-switched (CS) networks;
FIG. 3 is a flow diagram illustrating an exemplary method for a receiving terminal to identify a calling terminal;
FIG. 4A illustrates a representative embodiment for establishing an association of the caller's actual identity and an identifier perceivable in the CS domain in order for the receiving terminal to recognize the calling party;
FIG. 4B illustrates a representative embodiment for establishing an association of the caller's actual identity and an identifier perceivable in the PS domain in order for the receiving terminal to recognize the calling party;
FIGs. 5A and 5B illustrate message flow diagrams of representative exemplary embodiments of the invention; and
FIG. 6 illustrates a representative system in which the present invention may be implemented or otherwise utilized.

### DESCRIPTION OF ILLUSTRATED EMBODIMENTS OF THE INVENTION

In the following description of various exemplary embodiments, reference is made to the accompanying drawings which form a part hereof, and in which is shown by way of illustration various embodiments in which the invention may be practiced. It is to be understood that other embodiments may be utilized, as structural and operational changes may be made without departing from the scope of the present invention.

Generally, the present invention provides mechanisms and approaches for providing at least the identity of communication device users who initiate communications from a fixed network such as the Internet. For example, the present invention provides a manner for identifying an initiating communication device/user that is not associated with an identifiable telephone number that may otherwise facilitate identification of the initiating user by way of, for example, Caller Line Identification (CLI). More particularly, fixed network devices such as terminals, computers and other devices capable of communicating via networks such as the Internet generally do not have an identifiable telephone number associated therewith, and technologies that operate using telephone numbers such as CLI are unable to identify the originator of an Internet or other similar network-initiated call. In a particular example, a Voice over Internet Protocol (VoIP) call or other computer telephony call may be associated with an Internet address, e-mail address or other computer-related address. VoIP generally refers to services for managing the delivery of voice information using the Internet Protocol (IP), such that the voice data is sent via packets in the packet-switched (PS) domain rather than the traditional CS domain. These VoIP or other PS domain calls are not typically associated with a telephone number to which services such as CLI are associated. In such cases, the recipient of a traditional circuit-switched (CS) call cannot be notified of the calling party, and/or of rich content associated with the caller such as an image(s), audio, and/or other multimedia. The present invention solves these and other problems, and can be used with technologies that involve different identifying information (*e.g.,* telephone numbers versus network-related addresses), and/or to apply to legacy technologies where these different identifiers are inherently present.

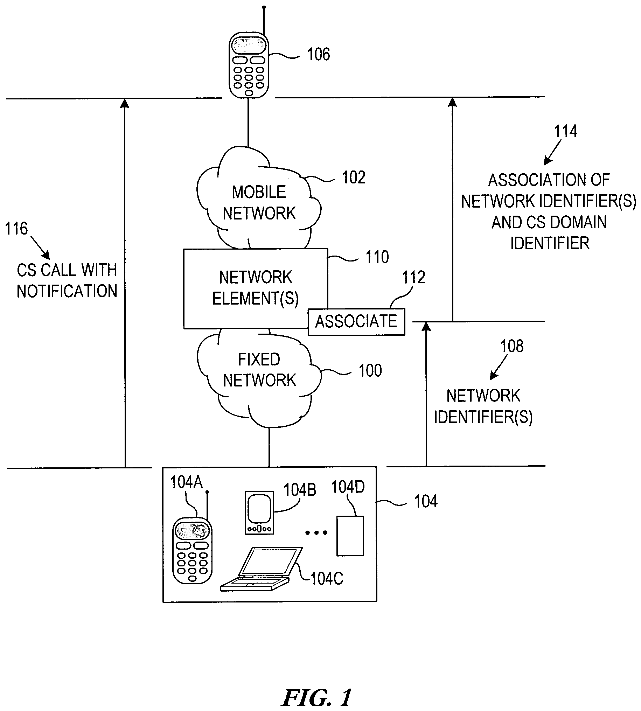

FIG. 1 is a block diagram depicting one aspect of the invention where the identity of the calling user is made available to the call recipient, notwithstanding the inability of standard calling line identity technology to provide such information. In the illustrated embodiment of FIG. 1, a flexible identity presentation is provided for incoming voice calls from a fixed network user. In one specific embodiment, the Internet represents at least a part of the fixed network 100, and the mobile network 102 can be represented by any one or more of current and future mobile networks such as second generation (2G), third generation (3G) networks and beyond. For example, the mobile network 102 may be represented by one or more of a Global System for Mobile Communications (GSM) network or GSM/GPRS network, Personal Communications Services (PCS), IP Multimedia Subsystem (IMS), Universal Mobile Telecommunication System (UMTS), etc.

In the embodiment of FIG. 1, a terminal(s) 104 represents an originator of a call. The terminal 104 may be a mobile or fixed device capable of connecting and communicating with the fixed network 100. For example, the terminal 104 may be a mobile phone 104A, Personal Digital Assistant (PDA) 104B, computing device 104C, or other device 104C capable of communicating via the fixed network 100. The target recipient of the call is shown in FIG. 1 as the mobile device 106, which includes any communication/computing device capable of communicating with the mobile network 102. The majority of current terminals 106 do not provide full support for Voice over IP (VoIP) and/or are not capable of carrying multiple services at the same time such as in the case of devices that support Dual Transfer Mode (DTM). Many future terminals will also be without these capabilities. DTM combines properties of circuit-switching technology with the dynamic properties of packet-switching technology. More particularly, DTM is a form of circuit switching for networks that employs Time Division Multiplexing (TDM) in a way that dynamically reallocates available bandwidth to users that need it. Thus, DTM can guarantee certain bandwidth as circuit-switched systems do, while also supporting dynamic reallocation of bandwidth between hosts. As indicated above, many of the current and future terminals do not or will not support such technologies. In such cases a voice application in the receiving terminal 106 generally takes control of the terminal 106 for an incoming voice call, and suspends other applications running in the terminal 106.

Further, the calling terminals 104 may not have traditional telephone numbers associated with them. For example, a terminal making a VoIP call via the Internet may have an Internet address, e-mail address, or other network-related identifier, but may not have any identifier corresponding to a traditional telephone number. As a more particular example, a user making a VoIP call from his/her computer via the Internet may not have an associated E.164 number. E.164, originally developed by the International Telecommunication Union (ITU), is an international numbering plan for public telephone systems in which each assigned number contains a country code (CC), a national destination code (NDC), and a subscriber number (SN). There can be up to 15 digits in an E.164 number, where each number is unique worldwide. In the fixed Internet or other similar networks, the users may not have a traditional E. 164 reserved for them, and when there is an incoming voice call from the Internet user to a mobile phone user, it is not possible to show or otherwise establish the identity of the calling user. The present invention solves this problem and other problems, and also allows for rich content to be provided in connection with the calling party identification.

Referring again to FIG. 1, the illustrated embodiment involves providing a notification of an upcoming voice call number, suitable for caller line identification (CLI) or other related identification, to the recipient device prior to the actual voice call. An association is made of this voice call number/identifier with an actual calling line identity of the sending terminal/user, thereby facilitating recognition of the actual calling line identity by way of this voice call number or identifier. For example, a network identifier(s) 108 is provided to a server or other appropriate network element(s) 110 via the fixed network 100. An association module 112 residing at or otherwise accessible to the network element 110 associates the network identifier(s) 108 with a circuit-switched (CS) domain voice call number/identifier, such as a designated or temporary E.164 number. The association module may be unique to a user and is accessible either with calling party identifier (CLI) or with the calling party identifier. This association 114 is provided to the recipient terminal 106, where it can be stored at the terminal 106 or otherwise accessible by the terminal 106. Thereafter, the call 116 can be made whereby the network element 110 provides the E.164 (or analogous) number associated with the calling terminal 104, and the recipient terminal 106 can use that number to identify the actual identity or name that was previously associated with that number and stored for use by the terminal 106. This identification may be made at the terminal using a calling line identity scheme, such as CLI. CLI generally refers to a service where the telephone number is transmitted when the phone call is made. With a CLI-equipped receiving terminal, the user can see the phone number of the caller before answering the call. Thus, the invention provides a number of benefits and solves various problems of the prior art, including the presentation of calling line identification in CS voice calls to/from the Internet (e.g., VoIP) and/or other similar network environments operating in the packet-switched (PS) domain.

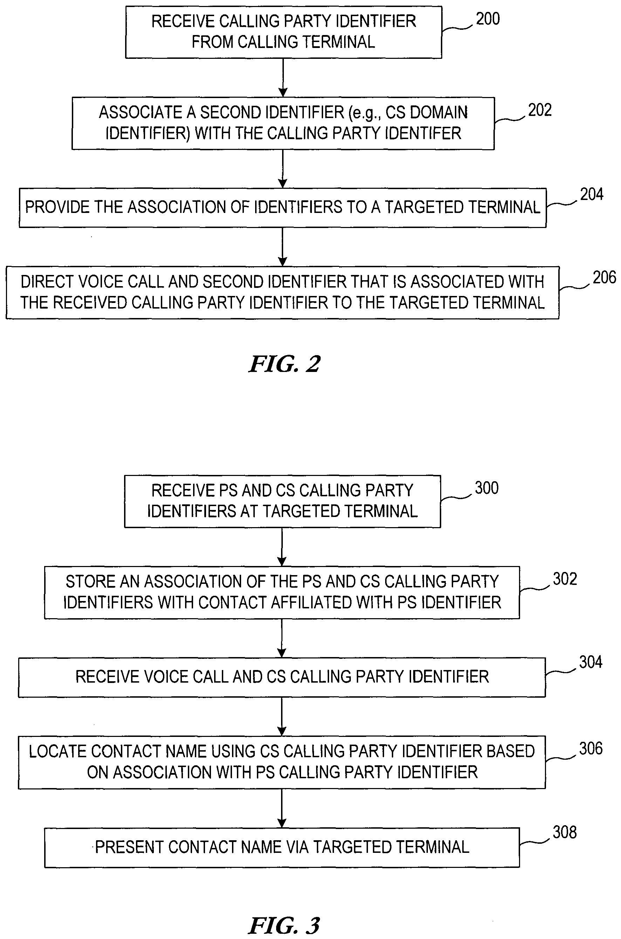

FIG. 2 is a flow diagram illustrating an exemplary method for identifying calling parties in a voice communication involving both packet-switched (PS) and circuit-switched (CS) networks. The embodiment of FIG. 2 applies to a network element, such as a server, that serves as the control and connection point between fixed network users and mobile users. A calling party identifier is received 200 at the server from a calling terminal. For example, the calling party identifier may be any name, e-mail address, Session Initiation Protocol (SIP) address, Instant Messaging (IM) address, Multimedia Messaging Service (MMS) address, or any other data that identifies the calling party.

In the illustrated embodiment, a second identifier is associated 202 with the calling party identifier. This "association" may be performed (among other ways) in advance, or in connection with each voice call to a targeted terminal. For example, the second identifier may be a CS domain identifier, such as a dedicated E.164 number, which is associated in advance with the particular calling party. In another example, the second identifier may be a temporary CS domain identifier, such as an E.164 number that is temporarily associated with the calling party identifier. These and other embodiments are described in greater detail below.

FIG. 2 also shows that the association of identifiers is provided 204 to a targeted terminal. In one embodiment, this can be done in advance of the voice call such as by a server providing an electronic business card. Such a business card can be sent, for example, when the user adds a new contact (*e.g.,* instant messaging buddy, etc.) to the Internet communication application. In another example, providing 204 the association of identifiers may be performed in connection with each particular voice call. Again, these and other embodiments are described in greater detail below.

When the targeted terminal has received this information, and in some embodiments locally stored this association of identifiers, the targeted terminal can use this information upon receipt of a voice call to identify the calling party. More particularly, the server or other network element can direct 206 a voice call from the calling party to the targeted terminal. The server also provides the second identifier that is associated with the received calling party identifier. In this manner, the receiving terminal can determine the second identifier (*e.g.,* CS domain identifier, such as an E.164 number) using a calling line identity scheme, such as, for example, Calling Line Identity (CLI). The receiving terminal can use this second identifier to locate the previously associated identifier that is known to the receiving device to identify the calling party. For example, an E.164 number may be associated with an e-mail address (*e.g.,* Jdoe@ABCXYZcompany.com) of the calling party, which is associated with John Doe in the receiving terminal's phonebook or other contact list/database. The name "John Doe" can then be presented via the receiving terminal, which may involve any one or more of displaying the name in text, providing audio of the name, providing an image and/or video of the person associated with the name, providing graphics, tactile feedback, and/or any other user interface mechanism to identify the calling party specifically or as part of a particular group.

FIG. 3 is a flow diagram illustrating an exemplary method for a receiving terminal to identify a calling terminal. In the example of FIG. 3, the receiving terminal receives 300 an association of PS and CS identifiers. As an example of such a PS/CS identifier association, this may include an E.164 number and an e-mail address. The receiving terminal can store 302 these identifiers in a phonebook, contact list, other contact database, or other memory. The "contact" may be a newly generated contact that includes the associated identifiers, or may be an existing contact where the PS identifier is compared to a contact list to identify the matching contact name, and whereby the CS identifier is then stored, either temporarily or permanently. The identifiers may be received also via SMS, MMS, Instant Messaging, e-mail or using other messaging technology and where they can be picked and stored, such as stored to a phonebook or other contact database or storage.

When a voice call is received 304 at the receiving terminal, the CS calling party identifier is also received. Using at least the CS calling party identifier based on the association with the PS calling party identifier, the associated contact name is located 306. The contact name can then be presented 308 via the targeted terminal. It should be recognized that the contact name may be any identifiable name, nickname, company, or other stored characteristic that identifies the calling party. It should also be recognized that the contact name may be "presented" using any user interface mechanism, including but not limited to visually and/or audibly presenting the name or other identifying information, and/or using tactile feedback or other identifying means.

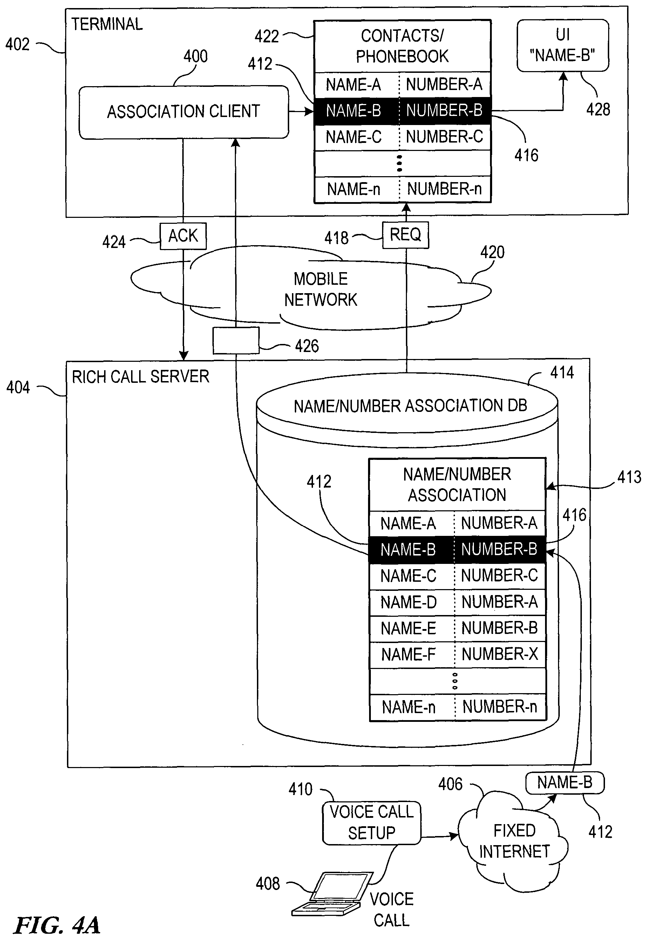

The present invention may be implemented in various manners. One representative embodiment is shown in FIG. 4A. In the embodiment of FIG. 4A, the caller identity (*e.g.,* name or other caller identifier) is associated with a phone number prior to sending the voice call setup information to a mobile terminal. The "phone number" is a number that can be used with a caller identification scheme, such as CLI, and in one embodiment is represented by an E. 164 number. FIG. 4A illustrates a representative embodiment for establishing such an association in order for the receiving terminal (*i.e.,* the mobile terminal that is the target of the call) be able to recognize the calling party.

As will be described in greater detail in connection with FIG. 4A, this embodiment can implement relevant functionality in a client application in the terminal that is the recipient of the call. In one embodiment, this client application(s) is implemented as a JAVA Mobile Information Device Profile (MIDP) client as part of a "rich call" client. As is known in the art, JAVA MIDP is a set of J2ME Application Programming Interfaces (APIs) that define how certain applications interface with mobile devices such as cellular telephones, personal digital assistants, two-way pagers, etc. Applications conforming to the JAVA MIDP standard are generally referred to as MIDlets. It should be recognized that a JAVA MIDP client is merely an example of the type of client application that may be implemented in the recipient terminal to perform functions of the present invention. Thus, the association client 400 of the terminal 402 FIG. 4A may be implemented as a JAVA MIDP client or as another type of client. The association client 400 will be described in greater detail below.

In the illustrated embodiment, the association client 400 is implemented as a JAVA MIDP client as part of a rich call client. The rich call client is registered and connected to a network server(s), such as the rich call server 404. The rich call server 404 serves as the control and connection point between the fixed network/internet 406 users (*e.g.,* the user associated with the computing/communication device 408) and mobile users such as the terminal 402. The device 408 may be any computing/communication device capable of communicating via a fixed network 406 such as the Internet. When there is an incoming voice call from the fixed internet user 408, the voice call setup information 410 includes an identification of the user 408, shown in FIG. 4A as a "name," and more specifically "Name-B" 412 which identifies the user and/or device 408 by name or by information that can be associated with a name (*e.g.,* mobile identifier, etc.). The incoming voice call from the fixed internet user 408 also includes the called party identifier, which in one embodiment is a pointer to the name/number association database 414 record and the association record 413 of the particular mobile terminal 402. This setup 410/412 information arrives at the rich call server 404 via the fixed internet 406. Thus, the rich call server 404 knows the identity of the calling party based on the voice call setup 410 and/or name 412.

In one embodiment, the rich call server 404 may reserve a temporary number capable of being ascertained via a calling line identity scheme operable in the CS domain. One such calling line identity scheme is CLI. In such a case, the temporary number being reserved is an E.164 number. In one embodiment, if the name/number association already exists for the calling party identifier, then no temporary number needs to again be reserved at the server 404. On the other hand, if the name/number association does not already exist for that calling party identifier, then rich call server 404 may reserve a temporary E.164 number that will be used in a circuit-switched voice call setup towards the user of the mobile terminal 402. This is illustrated in the name/number association database (DATABASE) 414. One or more name/number associations may be stored for each of one or more users. For example, the "Name-B" may be associated with the "Number-B" 416, which is a temporarily reserved E.164 number in the present example, which may then be pushed or otherwise provided to the terminal 402.

Before initiating a circuit-switched (CS) voice call setup, the rich call server 404 sends a request 418 via the mobile network 420 to the mobile terminal's 402 client 400 to add a new entry to the phonebook, contact list, or other stored contacts 422 of the terminal 402. In another embodiment, the request may be to modify an existing contact versus creating a new entry. In one embodiment, the modified or new entry is a temporary modification/addition to the contacts 422, while in another embodiment the modified or new entry may be permanently added to the contacts 422.

The request 418 in the embodiment of FIG. 4A thus includes the real calling line identity (name), which in the illustrated as Name-B 412. Due to the association of the Name-B 412 with the CLI-recognizable number (*e.g.,* Number-B 416), the terminal 402 will be able to use a service such as CLI to identify the Name-B 412 by way of the associated and otherwise unavailable CLI-recognizable E.164 number shown as Number-B 416.

The client 400 in the terminal accesses the contacts/phonebook 422, and in one embodiment stores the name and number (*e.g.,* Name-B 412 and Number-B 416). In one embodiment, the client 400 is implemented as a JAVA client that uses JAVA Personal Information Manager (PIM) API to access the phonebook 422, although any suitable manner of accessing this information may be utilized. When the client 400 has stored the name/number, one embodiment involves the client 400 sending an acknowledgement 424 to the rich call server 404.

The server 404 may then initiate a CS voice call setup, such as through an Internet Protocol - Private Branch eXchange (IP PBX) or similar data network system. An IP PBX is a customer premises phone system that manages telephones in the system and serves as a gateway to voice and data networks. It allows calls to be placed via a network rather than via the standard circuit-switched telephone infrastructure. Thus, an IP PBX is telephone switching component that can reside at or be otherwise available to the server 404, and calls can be transmitted via the network 420 rather than via a traditional Public Switched Telephone Network (PSTN).

When the server 404 initiates the CS voice call setup as described above, the calling line identity number is set as the previously assigned number (*e.g.,* Number-B 416). For example, where an E.164 number has been associated with the calling party name and sent to and stored at the contacts/phonebook 422, the subsequent initiation of the voice call includes the E.164 number 416 which is then provided to the terminal 402 as shown by voice call setup 426. When the call setup 426 information arrives at the terminal 402, it is then possible to show or otherwise present the real calling line identity, as the E.164 or other similar number can be used with a calling line identity scheme operable in the CS domain, such as CLI, to identify the caller. This occurs where the terminal 402 obtains the E.164 or other similar number via the voice call setup information 426, and compares this to the stored associations in the contacts/phonebook 422 (or otherwise stored remote to the terminal 402 but accessible by the terminal 402). The "name" that is associated with the number provided via the voice call setup information 426 can then be presented via the appropriate user interface (UI) mechanism(s), such as the UI 428 which presents the "Name-B."

In this manner, the name/number association is provided to the terminal 402 prior to initiation of the actual voice call. The Number-B 416 that was associated at the server 404 with the Name-B 412 of the calling party is also provided to the terminal and can be stored in a memory or database 422. When the actual voice call occurs, the Name-B 412 is used to identify the E.164 (or other) number at the server 404, which is then provided to the terminal 402 and used to refer back to the associated Name-B 412 stored at or otherwise accessible to the terminal 402.

When the voice call is completed, the rich call server 404 can, and in one embodiment does, request the deletion of the name/number association from the phonebook 422 associated with the JAVA (or other) client 400. This client 400 functionality can be performed transparent to the end user, and the user experience is very flexible.

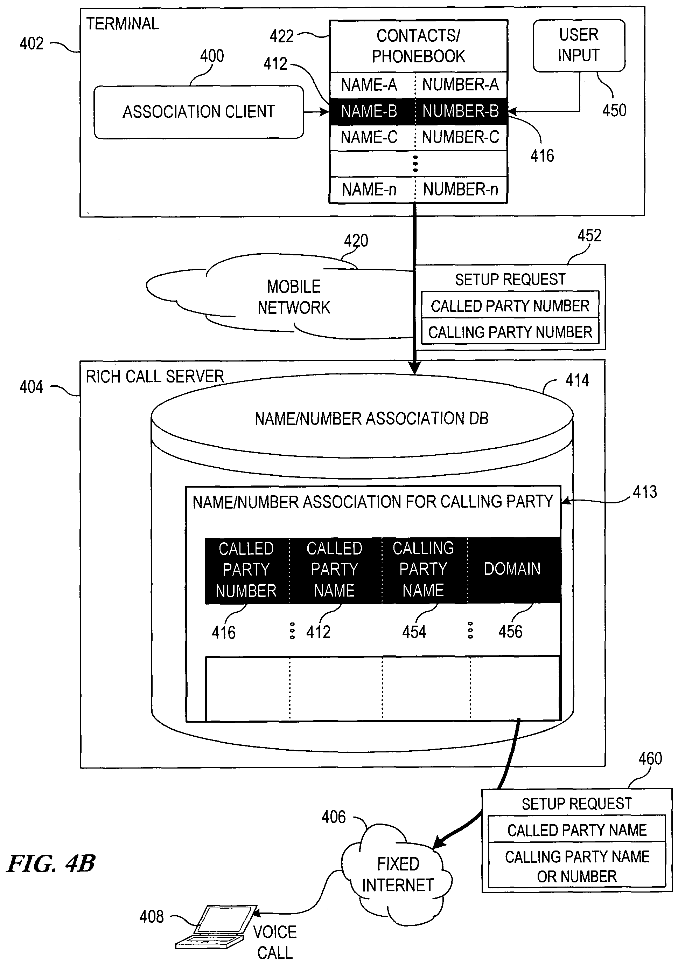

In accordance with one embodiment, calls may also utilize the associations of the present invention when calls are initiated from the circuit-switched (CS) domain and directed towards the packet-switched (PS) domain. Thus, an analogous "association" may be used in the direction from the CS-based caller to the PS-based targeted recipient - *i.e.,* the opposite call direction as previously described. FIG 4B illustrates an example where a voice call is initiated from the mobile user to a fixed internet user(s). The reference numbers of FIG. 4A are retained in FIG. 4B where appropriate.

The mobile user can select, using the user input 450, the desired name-B (and number-B) from the phonebook, contact database, or other mobile client memory 422. An example of such a name and number is "name@service.com" and "555-555-1212" respectively. The caller, *i.e.,* user of terminal 402 in the illustrated embodiment, initiates a call to the network. This is depicted by the setup request 452, which can include information such as the called party number (*e.g.,* 555-555-1212) and the calling party number (*e.g.,* 555-555-0000). In other words, the calling party number corresponds to the phone number of the terminal 402 that is making the call, and the called party number corresponds to the phone number of the terminal 408 that is being called.

The call is routed through the CS network to the server 404, referred to as the Rich Call Server 404 in the illustrated embodiment. The server 404 uses the CLI of the calling party (*i.e.,* the calling party number in the illustrated embodiment) to find the appropriate area 413 of the database 414 relating to the calling party's associations. In one embodiment, the calling party number is used as a pointer to the particular record in the database 414. From the record 413 the match with number-B, which is the called party number 416, is found. This called party number 416 is associated with other information, which includes the called party name 412, also shown as Name-B 412 in the phonebook 422 of the terminal 402. Other information which may be associated with the called party number 416 in the database 414 is the calling party name 454, and possibly a domain name 456. Table 1 below shows an example of a record in the name/number association 413 for the calling party:

**TABLE 1**

| CALLED PARTY NUMBER | CALLED PARTY NAME | CALLING PARTY NAME | DOMAIN |
|---|---|---|---|
| 555-555-1212 | friend 1 @ service.com | johndoe @ yyyy.fi | Domain-1 |
| 555-555-1111 | friend2 @ service.net | john_doe @ zzzz.fi | Domain-2 |

Thus, from the record 413 the match with the called party number 416 is found with the called party name 412, possibly the calling party name 454, and possibly an Internet domain 456. The Rich Call Server 404 selects the destination domain based on the Internet domain information due to the fact that e-mail addresses can be used for various places, and the domain name part in the email address cannot guarantee that the service provider domain is the same as the domain name. The Rich Call Server 404 sends the voice call request 460 to the fixed internet user 408, and identifies the called party with the called party name 412 (also shown as Name-B 412), and the calling party with information such as the original CS calling party identifier (CLI) and/or with name-A 454.

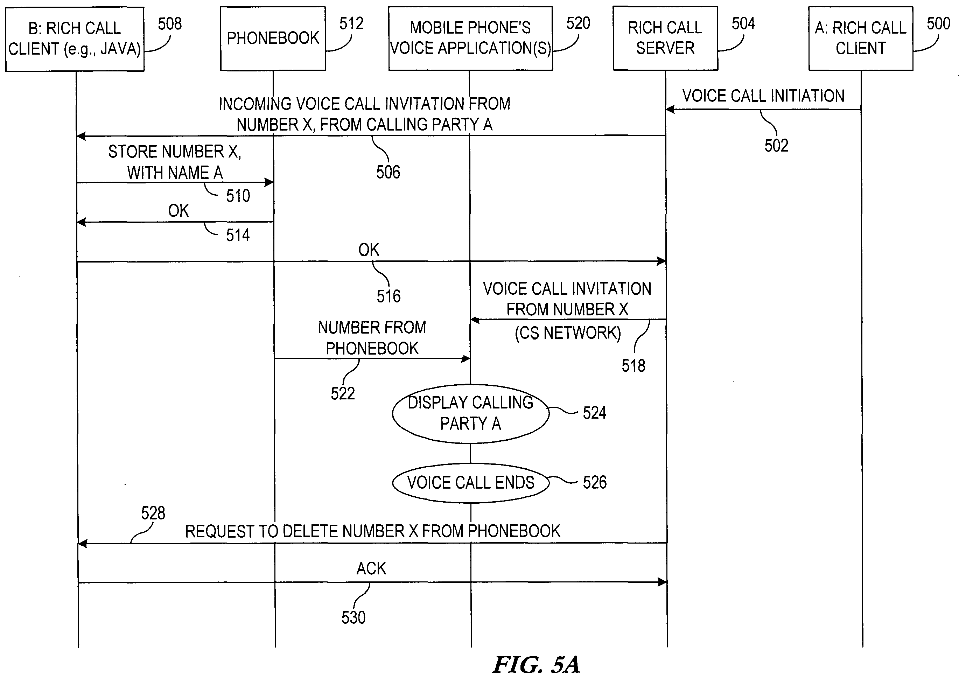

FIG. 5A is a message flow diagram illustrating one embodiment of the invention, which generally corresponds to the embodiment of FIG. 4A. A client application 500 on the call-initiating terminal initiates 502 a voice call to user "B." The voice call initiation 502 is sent, and received at the server 504. The server 504 sends 506 the voice call invitation from number X and calling party A to the client 508 at the targeted terminal. This association of number X and calling party A is stored at the server 504, and also stored 510 in the local terminal's phonebook 512 or other similar memory/database. An acknowledgment 514 of the successful storing of the association in the phonebook 512 may be sent to the client 508, which in turn may acknowledge 516 the successful recognition of the association to the server 504. It should be noted that such acknowledgements are used in embodiments of the invention, but such acknowledgements are not necessarily required. For example, assumptions of proper recognition by the client 508 and/or phonebook 512 may be made based on, for example, an expired time duration or other known event.

When the client 508 and phonebook 512 have successfully made note of the association of the number X and name A, the server 504 forwards 518 the voice call invitation from number X via the CS network to the voice application(s) on the mobile device 520. This voice application(s) can identify the stored number X in the phonebook 512 and provide 522 the previously associated name A to the voice application(s). Using this information, the mobile device 520 can display 524 or otherwise present the calling party A to the user of the mobile phone 520.

When the voice call ends 526, the server may request 528 that the client 508 delete the number X from the phonebook 512, and the client 508 may acknowledge 530 that this has been completed. Alternatively, the rich call client 508 may detect the release of the voice call and delete the number X from the phonebook 512. In this manner, an E.164 or other analogous identifier perceivable in the CS domain can be temporarily used to allow the target device to identify the calling party.

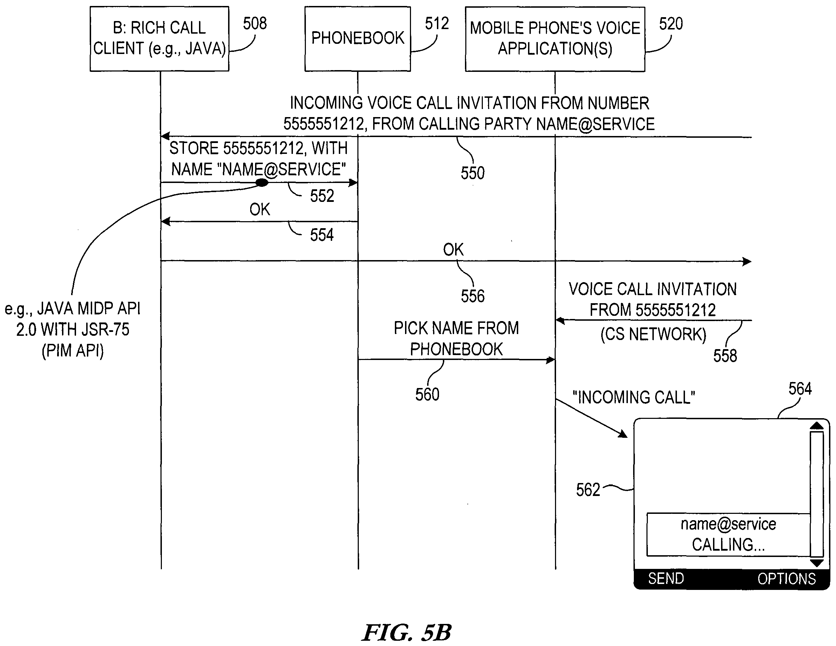

FIG. 5B is a message flow diagram illustrating another representative embodiment of the invention. Like reference numbers for the client 508, phonebook 512 and voice application(s) 520 are used in FIG. 5B as were used in FIG. 5A. In the illustrated embodiment of FIG. 5B, the incoming voice call invitation 550 is from a particular assigned number (5555551212) that has been associated with the calling party "name@service". For example, one embodiment of the invention associates a certain number of E.164 numbers with names (*e.g.,* name@service), which are then stored in the phonebook 512 of the terminal. A similar association is stored at the server. According to one embodiment, the association is not tightly coupled with the incoming voice call. For example, the associations may be stored at the terminal in advance, and independent of, receipt of any voice call. As a more particular example, an electronic business card or other similar contact information can be provided by the server prior to, and not in connection with, receipt of a voice call. The business card or other data can be sent, for example, when the user adds a new contact (*e.g.,* Instant Messaging buddy) to the Internet communication application.

In the illustrated embodiment, the association of the various names and numbers is unique to the particular terminal, and the E.164 numbers are reusable for other rich call users. Thus, for an incoming voice call from known and associated Internet users, the rich call server is able to pick a correct E.164 number for the CS voice call setup that can ultimately be identified by the target terminal.

More particularly, the incoming voice call invitation 550 is received at the client 508, which can then store 552 and associate this number 5555551212 with the associated name, depicted as "name@service". In this embodiment, the number is associated with the name at both the terminal and the rich call server, and thus this initial receipt 550 and storing 552 to the phonebook 512 could occur just once (although could be performed at each voice call). In other embodiments, the association can be sent one or more times prior to the terminal receiving the voice call. In such an embodiment, no association would need to be sent in connection with each voice call, but rather the terminal can display the information when the voice call arrives based on the information previously received. In one embodiment, the terminal can "synchronize" the associations with the server at certain intervals, in connection with certain events, etc. In one embodiment, such associations can have a lifetime after which they automatically expire. For example, when an association in the client at the terminal has expired, the server can know to send the association before the next call comes in for that terminal. In any event, it should be recognized that the targeted terminal can be notified, in advance of receiving the voice call, of what the association(s) is, whereby the terminal need not receive the association(s) for each received voice call.

The phonebook 512 may acknowledge 554 the storing of the name/number, and the client 508 can acknowledge 556 this to the server. Thereafter, when a voice call invitation is received 558 via the CS network from a device having a name associated at the server with the number 5555551212, the appropriate name is selected 560 from the phonebook 512, and the mobile phone can present the caller identity of the incoming call. In one embodiment, the caller identity 562 is visually displayed on a display 564 of the target/recipient mobile terminal, although audio, tactile and/or other presentation means may be utilized.

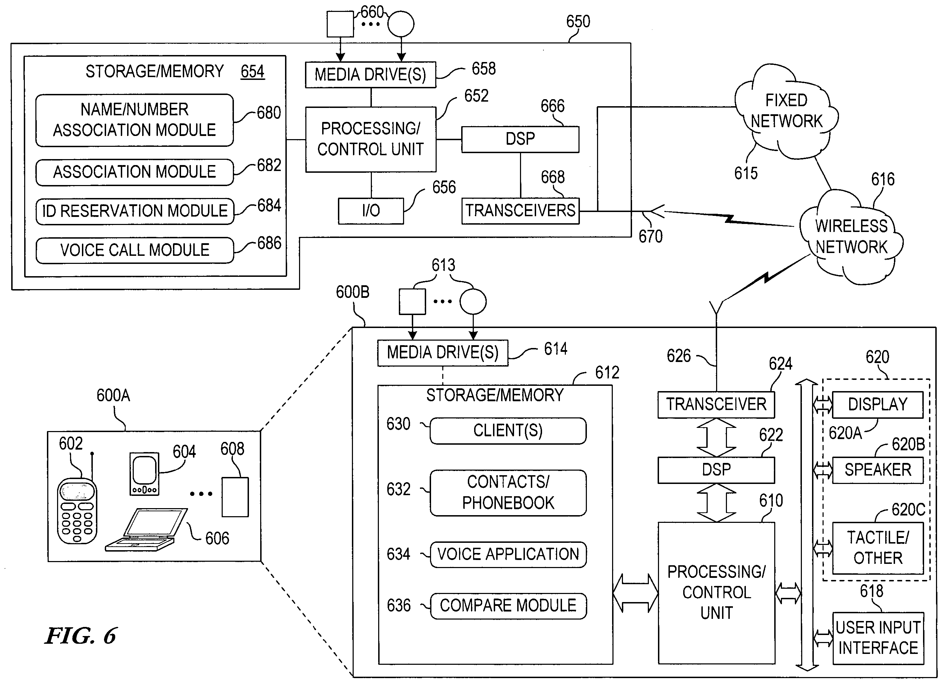

Hardware, firmware, software or a combination thereof may be used to perform the functions and operations in accordance with the invention. A call receiving (*e.g.,* targeted) terminal(s) in accordance with the invention may include any communication device capable of communicating over-the-air (OTA) with wireless networks and/or capable of communicating via wired networks. Such terminals include, for example, mobile phones, Personal Digital Assistants (PDAs), computing devices, and other networked terminals. A representative system in which the present invention may be implemented or otherwise utilized is illustrated in FIG. 6, where a terminal 600A/600B is represented as a wireless terminal capable of communicating information OTA.

The system includes one or more terminals 600A such as, for example, a mobile phone 602, PDA 604, computing device 606, or other communication device 608 capable of networked communication. The terminal 600A utilizes computing systems to control and manage the conventional device activity as well as the functionality provided by the present invention. For example, the representative wireless terminal 600B includes a processing/control unit 610, such as a microprocessor, controller, reduced instruction set computer (RISC), or other central processing module. The processing unit 610 need not be a single device, and may include one or more processors. For example, the processing unit may include a master processor and one or more associated slave processors coupled to communicate with the master processor.

The processing unit 610 controls the basic functions of the terminal 600B as dictated by programs available in the program storage/memory 612. The storage/memory 612 may include an operating system and various program and data modules associated with the present invention. In one embodiment of the invention, the programs are stored in non-volatile electrically-erasable, programmable read-only memory (EEPROM), flash ROM, etc., so that the programs are not lost upon power down of the terminal. The storage 612 may also include one or more of other types of read-only memory (ROM) and programmable and/or erasable ROM, random access memory (RAM), subscriber interface module (SIM), wireless interface module (WIM), smart card, or other fixed or removable memory device/media. The programs may also be provided via other media 613, such as disks, CD-ROM, DVD, or the like, which are read by the appropriate interfaces and/or media drive(s) 614. The relevant software for carrying out terminal operations in accordance with the present invention may also be transmitted to the terminal 600B via data signals, such as being downloaded electronically via one or more networks, such as the data network 615 or other data networks, and an intermediate wireless network(s) 616 in the case where the terminal 600A/600B is a wireless device such as a mobile phone.

For performing other standard terminal functions, the processor 610 is also coupled to user input interface 618 associated with the terminal 600B. The user input interface 618 may include, for example, a keypad, function buttons, microphone, joystick, scrolling mechanism (*e.g.,* mouse, trackball), touch pad/screen, or other user entry mechanisms (not shown). These and other user input components are coupled to the processor 610 as is known in the art.

A user interface (UI) 620 is provided, which allows the user of the terminal 600A/B to perceive information visually, audibly, through touch, etc. For example, one or more display devices 620A may be associated with the terminal 600B. The display 620A can display the calling party identification information as previously described. A speaker(s) 620B may be provided to audibly present this and/or other information. For example, an audio recording, computer-generated voice, sound/tone(s), ringtone, song, and/or other audio presentation may be used to notify the targeted device user of the name or other identification of the calling party. Other user interface (UI) mechanisms can also be provided, such as tactile 620C or other feedback. The calling party information may be provided by any type of presentation perceivable by the user.

The illustrated terminal 600B also includes conventional circuitry for performing wireless transmissions over the wireless network(s) 616. The DSP 622 may be employed to perform a variety of functions, including analog-to-digital (A/D) conversion, digital-to-analog (D/A) conversion, speech coding/decoding, encryption/decryption, error detection and correction, bit stream translation, filtering, etc. The transceiver 624 includes at least a transmitter and receiver, thereby transmitting outgoing radio signals and receiving incoming radio signals, generally by way of an antenna 626.

In one embodiment, the storage/memory 612 stores the various client programs and data used in connection with the present invention. For example, the storage/memory 612 includes storage to store the association client programs/applications 630, such as a JAVA MIDP client which can be executed via the processing/control unit 610 to carry out functions in accordance with the present invention. For example, the client 630 may include instructions to perform operations including storing a received name/number association (*e.g.,* network-related name and designated or temporary E.164 number) in the contacts/phonebook 632 or other related storage or database. In one embodiment, a JAVA client 630 uses JAVA PIM API to access the phonebook 632, and stores the name and number. The client 630 is also capable of providing an acknowledgement message to the server providing the name/number association that the terminal has received the information. When the voice call is then received at the terminal 600B, a voice application(s) 634 can recognize the E.164 number or other analogous identifier, and retrieve the associated name from the phonebook 632 to present via the UI interface 620. The voice application(s) and/or the client 630 may utilize a compare module 636 to perform the comparison with the received E.164 number or other analogous identifier to locate the associated name for presentation.

It should be recognized that the modules 630, 632, 634, 636 may be separate modules operable in connection with the processor 610, may be single module performing each of these functions, or may include a plurality of such modules performing the various functions. In other words, while the modules are shown as multiple software/firmware modules, these modules may or may not reside in the same software/firmware program. It should also be recognized that one or more of these functions may be performed using hardware. For example, a compare function may be performed by comparing the contents of hardware registers or other memory locations using hardware compare functions. These client and data modules are representative of the types of functional and data modules that may be associated with a terminal in accordance with the invention, and are not intended to represent an exhaustive list.

FIG. 6 also depicts a representative computing system 650 operable on the network for making associations of calling party identifiers and identifiers ascertainable by a calling line identity scheme, and for providing the information to the terminal 600B. For example, the system 650 may represent a rich call server or other server such as previously described (*e.g.,* network element 110, rich call server 404, etc.).

Thus, in one embodiment, the computing system 650 represents the rich call server system previously described. The server system 650 may be a single unit, or a distributed system. The illustrated computing system/server 650 includes a processing arrangement 652, which may be coupled to the storage/memory 654. The processor 652 carries out a variety of standard computing functions as is known in the art, as dictated by software and/or firmware instructions. The storage/memory 654 may represent firmware, media storage, and/or memory. The processor 652 may communicate with other internal and external components through input/output (I/O) circuitry 656. The computing system 650 may also include media drives 658, such as hard and floppy disk drives, CD-ROM drives, DVD drives, and other media 660 capable of reading and/or storing information. In one embodiment, software for carrying out the operations at the computing system 650 in accordance with the present invention may be stored and distributed on CD-ROM, diskette, removable memory, or other form of media capable of portably storing information, as represented by media devices 660. Such software may also be transmitted to the system 650 via data signals, such as being downloaded electronically via a network such as the data network 615, Local Area Network (LAN) (not shown), wireless network 616, and/or any combination thereof.

In accordance with one embodiment of the invention, the storage/memory 654 and/or media devices 660 store the various programs and data used in connection with the present invention. For example, the single or distributed server 650 includes the name/number associations 680 provided to the recipient/targeted terminal, and an association module 682 to associate an E. 164 number or other identifier with a name or other network-based identifier that identifies the calling party. The server 650 may also include an identifier reservation module 684 to reserve an E.164 number or other similar identifier, where this number/identifier may be reserved on a permanent or temporary basis. The module 684 includes software/firmware executable via the processor 652 to reserve the appropriate number/identifier. For example, in the context of an E.164 number, the module 684 may first request or otherwise check for availability of an E.164 number, and associates a unique E.164 with the name to provide the name/number association. As described above, some E.164 numbers (or other identifiers) may be reused for different recipient terminals, thereby requiring fewer E.164 (or other) identifiers in total. For example, in the embodiment described in connection with FIG. 5B, the association of the numbers are unique to a user, and thus the E.164 numbers are re-usable for other rich call users. As another example, the embodiment of FIG. 5A involves reserving a temporary E. 164 number, which can be used again later after its temporary use.

The association module 682 can send the request to the targeted terminal's client 630 to add a new entry (or modify an existing entry) in a phonebook 632. The real calling line identity (name) is sent via the transceiver 668 together with the E.164 number or other identifier at the direction of the association module 682. The association module 682 can recognize and optionally respond to any acknowledgement messages provided by the targeted terminal. A voice call module 686 then initiates a CS voice call setup (*e.g*., through an IP PBX), where the calling line identity number is set as the previously assigned E.164 number. In one embodiment, the association module 682 of the server 650 includes software/firmware to request the deletion of the name/number association from the terminal's 600B phonebook 632.

The illustrated computing system 650 also includes DSP circuitry 666, and at least one transceiver 668 (which is intended to also refer to discrete transmitter/receiver components). While the server 650 may communicate with the data network 615 via wired connections, the server may also/instead be equipped with transceivers 668 to communicate with wireless networks 616 whereby an antenna 670 may be used.

Using the foregoing specification, some embodiments of the invention may be implemented as a machine, process, or article of manufacture by using standard programming and/or engineering techniques to produce programming software, firmware, hardware or any combination thereof. Any resulting program(s), having computer-readable program code, may be embodied within one or more computer-usable media such as memory devices or transmitting devices, thereby making a computer program product, computer-readable medium, or other article of manufacture according to the invention. As such, the terms "computer-readable medium," "computer program product," or other analogous language are intended to encompass a computer program existing permanently, temporarily, or transitorily on any computer-usable medium such as on any memory device or in any transmitting device.

For example, one embodiment of the invention includes a computer-readable medium having instructions stored thereon that are executable by a computing system for identifying calling parties. The instructions facilitate receiving a calling party identifier from a calling terminal initiating a voice call. The instructions effect the associating of a CS domain identifier with the calling party identifier, and provide the association of CS domain identifier and calling party identifier to a targeted terminal. The instructions further direct the voice call and the CS domain identifier associated with the calling party identifier from the calling terminal to the targeted terminal, whereby the targeted terminal can identify the calling party using the CS domain identifier to identify the associated calling party identifier. In another embodiment, the computer-readable medium includes instructions executable by a computing system for a receiving terminal to identify a calling terminal. The instructions enable receiving a first calling party identifier used in a packet-switched (PS) domain and a second calling party identifier used in a circuit-switched (CS) domain, and storing an association of the first and second calling party identifiers. The instructions also enable a voice call and the second calling party identifier originating from the calling terminal to be received, and using the received second calling party identifier to locate the associated first calling party identifier. The instructions further allow presenting an identification of the calling party using the first calling party identifier.

From the description provided herein, those skilled in the art are readily able to combine software created as described with appropriate general purpose or special purpose computer hardware to create a computing system and/or computing subcomponents embodying the invention, and to create a computing system and/or computing subcomponents for carrying out the method of the invention.

The foregoing description of the exemplary embodiments of the invention has been presented for the purposes of illustration and description. It is not intended to be exhaustive or to limit the invention to the precise form disclosed. Many modifications and variations are possible in light of the above teaching. It is intended that the scope of the invention be limited not with this detailed description, but rather determined by the claims appended hereto.

## Claims

1. A method comprising:
receiving (200) a calling party identifier associated with a packet-switched network (108) from a calling terminal (104) initiating (502) a voice call;
associating a circuit-switched domain identifier with the calling party identifier (108);
transmitting the association (114) of circuit-switched domain identifier and calling party identifier (108) to a targeted terminal (106); and
subsequently directing the voice call and the circuit-switched domain identifier associated with the calling party identifier (108) from the calling terminal (104) to the targeted terminal (106), whereby the targeted terminal (106) is configured to identify the calling party using the circuit-switched domain identifier to locate the associated calling party identifier (108).

2. The method of claim 1, wherein receiving (200) a calling party identifier (108) comprises receiving the calling party identifier (108) from the calling terminal (104) via a first network operating in a packet-switched domain.

3. The method of claim 1, wherein the circuit-switched domain identifier is ascertainable via a calling line identity scheme operable in the circuit-switched domain, whereby the targeted terminal (108) can identify the calling party by way of recognition of the circuit-switched domain identifier using the calling line identity scheme.

4. A terminal comprising:
storage to store contact information;
said terminal being configured to receive an association (114) of a circuit-switched network identifier with a calling party identifier (108) associated with a packet-switched network, and by further comprising:
a processing system configured to direct the storage to store the received association (114) of the circuit-switched network identifier and the calling party identifier (108);
a receiver to subsequently receive at least a voice communication and the circuit-switched network identifier of the calling party; and
wherein the processing system is further configured to locate the stored calling party identifier (108) of the calling party using the received circuit-switched network identifier, and to direct the terminal to present an identification of the calling party based on the calling party identifier (108).

5. The terminal as in claim 4, further configured to receive the association (114) in advance of, and independent of, receiving the voice communication.

6. The terminal as in claim 4, further configured to receive the association (114) in connection with receiving the voice communication.

7. The terminal as in claim 6, further configured to receive the association (114) in connection with each packet-switched-originating voice communication targeted for the terminal.

8. The terminal as in claim 4, wherein the circuit-switched network identifier comprises an E.164 telephone number, said terminal further comprising a user interface to present the identification of the calling party, wherein the user interface comprises any one or more of a display, a speaker, and a tactile mechanism.

9. The terminal as in claim 4, wherein the processing system is configured to direct the terminal to present an identification of the calling party by presenting the calling party identifier itself, and/or by presenting a name affiliated with the calling party identifier (108).

10. The terminal as in claim 4, wherein the terminal comprises any of a mobile phone, personal digital assistant, or computing device capable of wireless voice communications.

11. A server comprising:
a receiver to receive a calling party identifier associated with a packet-switched network (108) via a first network from a calling terminal (104) that initiated a voice call to at least one targeted terminal (106);
a transmitter;
a processing system configured to associate the calling party identifier (108) with a circuit-switched domain identifier recognizable in a second network, and configured to direct the transmitter to transmit the association (114) of the calling party identifier (108) and the circuit-switched domain identifier, and to subsequently transmit an inter-network voice call and the circuit-switched domain identifier associated with the calling party identifier (108), to the targeted terminal (106) which is configured to locate the calling party identifier (108) using the circuit-switched domain identifier.

12. The server as in claim 11, wherein the calling terminal (104) initiates (502) the voice call via the first network which is a packet-switched network, and wherein the targeted terminal (106) is operating in the second network which is a circuit-switched network.

13. The server as in claim 11, wherein the processing system is configured to associate the calling party identifier (108) with the circuit-switched domain identifier each time a voice call is to be directed between the first and second networks to the targeted terminal (106), or the processing system is configured to associate the calling party identifier (108) with the circuit-switched domain identifier prior to, and independent of the voice calls being directed between the first and second networks to the targeted terminal (106).

14. The server as in claim 11, wherein the processing system is configured to associate the calling party identifier (108) with the circuit-switched domain identifier by creating the association each time the calling party identifier (108) is received from the calling terminal (106).

15. The server as in claim 14, wherein the circuit-switched domain identifier is configured as a temporary circuit-switched domain identifier, and wherein the processing system is configured to provide the association of the temporary circuit-switched domain identifier and calling party identifier (108) by sending the association to the targeted terminal (106) for each received voice call, and prior to directing the voice call to the targeted terminal (106).

16. The server as in claim 11, wherein the circuit-switched domain identifier is configured as a temporary circuit-switched domain identifier, and wherein the processing system is configured to provide the association of the temporary circuit-switched domain identifier and calling party identifier (108) by sending and storing the association (114) in the targeted terminal (106) independently without direct association of received voice call.

## Patentansprüche

1. Verfahren mit:
Empfangen (200) einer mit einem paketvermittelten Netzwerk assoziierten Anruferkennung (108) von einem anrufenden Endgerät (104), das einen Sprachanruf initiiert (502);
Assoziieren einer leitungsvermittelten Domainkennung mit der Anruferkennung (108);
Übertragen der Assoziation (114) der leitungsvermittelten Domainkennung und Anruferkennung (108) zu einem Zielendgerät (106); und
anschließendes Leiten des Sprachanrufs und der mit der Anruferkennung (108) verbundenen leitungsvermittelten Domainkennung von dem anrufenden Endgerät (104) zu dem Zielendgerät (106), wodurch das Zielendgerät (106) dazu eingerichtet ist, um den Anrufer unter Verwendung der leitungsvermittelten Domainkennung zum Lokalisieren der assoziierten Anruferkennung (108) zu identifizieren.

2. Verfahren nach Anspruch 1, wobei das Empfangen (200) einer Anruferkennung (108) ein Empfangen der Anruferkennung (108) von dem anrufenden Endgerät (400) über ein erstes Netzwerk umfasst, das in einer paketvermittelten Domain arbeitet.

3. Verfahren nach Anspruch 1, wobei die leitungsvermittelte Domainkennung über ein Rufleitungserkennungsschema ermittelbar ist, das in der leitungsvermittelten Domain betreibbar ist, wobei das Zielendgerät (108) den Anrufer durch Erkennung der leitungsvermittelten Domainkennung unter Verwendung des Rufleitungserkennungsschemas identifizieren kann.

4. Endgerät, mit:
einem Speicher zum Speichern von Kontaktinformationen;
wobei das Endgerät dazu eingerichtet ist, um eine Assoziation (114) aus einer leitungsvermittelten Netzwerkkennung mit einer Anruferkennung (108), die mit einem paketvermittelten Netzwerk assoziiert ist, zu empfangen, und durch ferner mit:
einem Verarbeitungssystem, das dazu eingerichtet ist, um den Speicher zum Speichern der empfangenen Assoziation (114) aus der leitungsvermittelten Netzwerkkennung mit der Anruferkennung (108) anzuleiten;
einem Empfänger, um anschließend mindestens eine Sprachkommunikation und die leitungsvermittelte Netzwerkkennung des Anrufers zu empfangen; und
wobei das Verarbeitungssystem ferner dazu eingerichtet ist, um die gespeicherte Anruferkennung (108) des Anrufers unter Verwendung der empfangenen leitungsvermittelten Netzwerkkennung zu speichern, und um das Endgerät anzuleiten eine Identifikation des Anrufers auf Grundlage der Anruferkennung (108) zu präsentieren.

5. Endgerät nach Anspruch 4, ferner dazu eingerichtet, um die Assoziation (114) vor einem, und unabhängig von einem, Empfangen der Sprachkommunikation zu empfangen.

6. Endgerät nach Anspruch 4, ferner dazu eingerichtet, um die Assoziation (114) in Verbindung mit dem Empfangen der Sprachkommunikation zu empfangen.

7. Endgerät nach Anspruch 6, ferner dazu eingerichtet, um die Assoziation (114) in Verbindung mit jeder ursprungspaketvermittelten Sprachkommunikation zu empfangen, die für das Endgerät vorgesehen ist.

8. Endgerät nach Anspruch 4, wobei die leitungsvermittelte Netzwerkkennung eine E.164-Telefonnummer umfasst, wobei das Endgerät ferner eine Benutzerschnittstelle umfasst, um die Identifikation des Anrufers zu präsentieren, wobei die Benutzerschnittstelle mindestens eine Anzeige, einen Lautsprecher, oder einen Tastmechanismus umfasst.

9. Endgerät nach Anspruch 4, wobei das Verarbeitungssystem dazu eingerichtet ist, um das Endgerät anzuleiten eine Identifikation des Anrufers durch Präsentieren der Anruferkennung selbst, und/oder durch Präsentieren eines Namens, der an die Anruferkennung (108) angegliedert ist, zu präsentieren.

10. Endgerät nach Anspruch 4, wobei das Endgerät ein Mobiltelefon, einen Organizer, oder ein Computergerät umfasst, das/der zur drahtlosen Sprachkommunikation fähig ist.

11. Server, mit:
einem Empfänger zum Empfangen einer mit einem paketvermittelten Netzwerk assoziierten Anruferkennung (108) über ein erstes Netzwerk von einem anrufenden Endgerät (104), das einen Sprachanruf zu mindestens einem Zielendgerät (106) initiiert hat;
einem Sender;
einem Verarbeitungssystem, das dazu eingerichtet ist, um die Anruferkennung (108) mit einer in einem zweiten Netzwerk erkennbaren leitungsvermittelten Domainkennung zu assoziieren, und dazu eingerichtet ist, um den Sender anzuleiten die Assoziation (114) aus der Anruferkennung (108) und der leitungsvermittelten Domainkennung zu übertragen, und um anschließend einen netzwerkübergreifenden Sprachanruf und die leitungsvermittelte Domainkennung, die mit der leitungsvermittelten Anruferkennung (108) assoziiert ist, an das Zielendgerät (106) zu übertragen, das dazu eingerichtet ist, um die Anruferkennung (108) unter Verwendung der leitungsvermittelten Domainkennung zu lokalisieren.

12. Server nach Anspruch 11, wobei das anrufende Endgerät (104) den Sprachanruf über das erste Netzwerk initiiert (502), das ein paketvermitteltes Netzwerk ist, und wobei das Zielendgerät (106) in dem zweiten Netzwerk arbeitet, das ein leitungsvermitteltes Netzwerk ist.

13. Server nach Anspruch 11, wobei das Verarbeitungssystem dazu eingerichtet ist, um die Anruferkennung (108) mit der leitungsvermittelten Domainkennung jedes Mal zu assoziieren, wenn ein Sprachanruf zwischen den ersten und den zweiten Netzwerken an das Zielendgerät (106) zu leiten ist, oder das Verarbeitungssystem dazu eingerichtet ist, um die Anruferkennung (108) mit der leitungsvermittelten Domainkennung vor, und unabhängig von, den Sprachanrufen zu assoziieren, die zwischen den ersten und zweiten Netzwerken an das Zielendgerät (106) geleitet werden.

14. Server nach Anspruch 11, wobei das Verarbeitungssystem dazu eingerichtet ist, um die Anruferkennung (108) mit der leitungsvermittelten Domainkennung zu assoziieren, durch Erzeugen der Assoziation jedes Mal dann, wenn die Anruferkennung (108) von dem anrufenden Endgerät (106) empfangen wird.

15. Server nach Anspruch 14, wobei die leitungsvermittelte Domainkennung als eine temporäre leitungsvermittelte Domainkennung eingerichtet ist, und wobei das Verarbeitungssystem dazu eingerichtet ist, um die Assoziation der temporären leitungsvermittelten Domainkennung und Anruferkennung (108) bereitzustellen, durch Senden der Assoziation an das Zielendgerät (106) für jeden empfangenen Sprachanruf, und vor einem Leiten des Sprachanrufs zu dem Zielendgerät (106).

16. Server nach Anspruch 11, wobei die leitungsvermittelte Domainkennung als eine temporäre leitungsvermittelte Domainkennung eingerichtet ist, und wobei das Verarbeitungssystem dazu eingerichtet ist, um die Assoziation der temporären leitungsvermittelten Domainkennung und Anruferkennung (108) bereitzustellen, durch unabhängiges Senden und Speichern der Assoziation (114) an das Zielendgerät (106), ohne einer direkten Assoziation der empfangenen Sprachnachricht.

## Revendications

1. Procédé, comprenant les étapes consistant à :
recevoir (200) un identifiant de partie appelante associé à un réseau à commutation de paquet (108) depuis un terminal appelant (104) initiant (502) un appel vocal ;
associer un identifiant de domaine à commutation de circuit à l'identifiant de partie appelante (108) ;
transmettre l'association (114) d'identifiant de domaine à commutation de circuit et d'identifiant de partie appelante (108) à un terminal ciblé (106) ; et
diriger ensuite l'appel vocal et l'identifiant de domaine à commutation de circuit associé à l'identifiant de partie appelante (108) du terminal appelant (104) vers le terminal ciblé (106), de sorte que le terminal ciblé (106) est configuré pour identifier la partie appelante utilisant l'identifiant de domaine à commutation de circuit pour localiser l'identifiant de partie appelante associé (108).

2. Procédé selon la revendication 1, dans lequel la réception (200) d'un identifiant de partie appelante (108) comprend la réception de l'identifiant de partie appelante (108) depuis le terminal appelant (104) via un premier réseau fonctionnant dans un domaine à commutation de paquet.

3. Procédé selon la revendication 1, dans lequel l'identifiant de domaine à commutation de circuit peut être vérifié par un schéma d'identité de ligne appelante opérationnel dans le domaine à commutation de circuit, de sorte que le terminal ciblé (108) peut identifier la partie appelante par reconnaissance de l'identifiant de domaine à commutation de circuit en utilisant le schéma d'identité de ligne appelante.

4. Terminal comprenant :
une mémoire pour stocker des informations de contact ;
ledit terminal étant configuré pour recevoir une association (114) d'un identifiant de réseau à commutation de circuit avec un identifiant de partie appelante (108) associé à un réseau à commutation de paquet, et comprenant en outre :
un système de traitement configuré pour ordonner à la mémoire de stocker l'association reçue (114) de l'identifiant de réseau à commutation de circuit et de l'identifiant de partie appelante (108) ;
un récepteur pour recevoir ensuite au moins une communication vocale et l'identifiant de réseau à commutation de circuit de la partie appelante ; et
dans lequel le système de traitement est en outre configuré pour localiser l'identifiant de partie appelante stocké (108) de la partie appelante à l'aide de l'identifiant de réseau à commutation de circuit reçu, et pour ordonner au terminal de présenter une identification de la partie appelante sur la base de l'identifiant de partie appelante (108).

5. Terminal selon la revendication 4, configuré en outre pour recevoir l'association (114) avant et indépendamment de la réception de la communication vocale.

6. Terminal selon la revendication 4, configuré en outre pour recevoir l'association (114) en connexion avec la réception de la communication vocale.

7. Terminal selon la revendication 6, configuré en outre pour recevoir l'association (114) en connexion avec chaque communication vocale originaire d'une commutation de paquet ciblée pour le terminal.

8. Terminal selon la revendication 4, dans lequel l'identifiant de réseau à commutation de circuit comprend un numéro de téléphone E.164, ledit terminal comprenant en outre une interface utilisateur pour présenter l'identification de la partie appelante, dans lequel l'interface utilisateur comprend un quelconque ou plusieurs parmi un écran, un haut-parleur et un mécanisme tactile.

9. Terminal selon la revendication 4, dans lequel le système de traitement est configuré pour ordonner au terminal de présenter une identification de la partie appelante en présentant l'identifiant de partie appelante lui-même et/ou en présentant un nom associé à l'identifiant de partie appelante (108).

10. Terminal selon la revendication 4, dans lequel le terminal comprend un quelconque parmi un téléphone mobile, un assistant numérique personnel ou un dispositif informatique capable de communications vocales sans fil.

11. Serveur comprenant :
un récepteur pour recevoir un identifiant de partie appelante associé à un réseau à commutation de paquet (108) via un premier réseau à partir d'un terminal appelant (104) qui a initié un appel vocal vers au moins un terminal ciblé (106) ;
un émetteur ;
un système de traitement configuré pour associer l'identifiant de partie appelante (108) à un identifiant de domaine à commutation de circuit reconnaissable dans un second réseau, et configuré pour ordonner à l'émetteur de transmettre l'association (114) de l'identifiant de partie appelante (108) et du circuit identifiant de domaine commuté, et transmettre ensuite un appel vocal inter-réseaux et l'identifiant de domaine à commutation de circuit associé à l'identifiant de partie appelante (108), au terminal ciblé (106) qui est configuré pour localiser l'identifiant de partie appelante (108) en utilisant l'identifiant de domaine à commutation de circuit.

12. Serveur selon la revendication 11, dans lequel le terminal appelant (104) initie (502) l'appel vocal via le premier réseau qui est un réseau à commutation de paquet, et dans lequel le terminal ciblé (106) fonctionne dans le second réseau qui est un réseau à commutation de circuit.

13. Serveur selon la revendication 11, dans lequel le système de traitement est configuré pour associer l'identifiant de partie appelante (108) à l'identifiant de domaine à commutation de circuit chaque fois qu'un appel vocal doit être dirigé entre les premier et second réseaux vers le terminal ciblé (106), ou le système de traitement est configuré pour associer l'identifiant de partie appelante (108) à l'identifiant de domaine à commutation de circuit avant et indépendamment des appels vocaux dirigés entre les premier et second réseaux vers le terminal ciblé (106).

14. Serveur selon la revendication 11, dans lequel le système de traitement est configuré pour associer l'identifiant de partie appelante (108) à l'identifiant de domaine à commutation de circuit en créant l'association à chaque fois que l'identifiant de partie appelante (108) est reçu du terminal appelant. (106).

15. Serveur selon la revendication 14, dans lequel l'identifiant de domaine à commutation de circuit est configuré en tant qu'identifiant de domaine à commutation de circuit temporaire, et
dans lequel le système de traitement est configuré pour fournir l'association de l'identifiant de domaine à commutation de circuit temporaire et de l'identifiant de partie appelante (108) en envoyant l'association au terminal ciblé (106) pour chaque appel vocal reçu, et avant de diriger l'appel vocal vers le terminal ciblé (106).

16. Serveur selon la revendication 11, dans lequel l'identifiant de domaine à commutation de circuit est configuré en tant qu'identifiant de domaine à commutation de circuit temporaire, et dans lequel le système de traitement est configuré pour fournir l'association de l'identifiant de domaine à commutation de circuit temporaire et de l'identifiant de partie appelante (108) en envoyant et en stockant l'association (114) dans le terminal ciblé (106) de manière indépendante, sans association directe de l'appel vocal reçu.
